Europäisches Patentamt

European Patent Office

Office européen des brevets

(11) Veröffentlichungsnummer : **0 291 525 B1**

(12) **EUROPÄISCHE PATENTSCHRIFT**

(45) Veröffentlichungstag der Patentschrift :
**15.07.92 Patentblatt 92/29**

(21) Anmeldenummer : **88900010.5**

(22) Anmeldetag : **05.12.87**

(86) Internationale Anmeldenummer :
**PCT/DE87/00578**

(87) Internationale Veröffentlichungsnummer :
**WO 88/04253 16.06.88 Gazette 88/13**

(51) Int. Cl.⁵ : **B62D 11/10, F16H 47/04**

(54) **STUFENLOSES FAHR- UND LENKGETRIEBE FÜR GLEISKETTENFAHRZEUGE.**

(30) Priorität : **05.12.86 DE 3641648**

(43) Veröffentlichungstag der Anmeldung :
**23.11.88 Patentblatt 88/47**

(45) Bekanntmachung des Hinweises auf die
Patenterteilung :
**15.07.92 Patentblatt 92/29**

(84) Benannte Vertragsstaaten :
**DE FR GB IT SE**

(56) Entgegenhaltungen :
**EP-A- 0 102 049**
**DE-A- 1 965 847**
**DE-A- 2 521 331**
**DE-A- 3 538 002**

(56) Entgegenhaltungen :
**US-A- 3 383 952**
**US-A- 3 398 605**
**US-A- 3 426 621**
**US-A- 3 583 256**
**US-A- 3 596 535**
**US-A- 4 614 132**

(73) Patentinhaber : **Meyerle, Michael**
**Kiefernweg 9**
**W-7996 Meckenbeuren (DE)**

(72) Erfinder : **Meyerle, Michael**
**Kiefernweg 9**
**W-7996 Meckenbeuren (DE)**

(74) Vertreter : **Münich, Wilhelm, Dr. et al**
**Kanzlei Münich, Steinmann, Schiller**
**Willibaldstrasse 36/38**
**W-8000 München 21 (DE)**

EP 0 291 525 B1

## Beschreibung

Die Erfindung bezieht sich auf ein Getriebe mit stufenlosem Fahr- und Lenkantrieb nach dem Oberbegriff des Anspruchs 1 und 5.

Getriebe für Gleiskettenfahrzeuge mit stufenloser Lenkeinrichtung sind z.B. bekannt durch die EP 0 014 122, DE 27 39 830 oder DE 30 12 220. Ein Getriebe mit stufenlosem Fahr- und Lenkantrieb ist bekannt durch die EP 0 004 427. Diese Getriebesysteme besitzen jedoch nicht den Vorteil einer kompakten, service- und fahrzeugfreundlichen Bauweise. Auch eine Modulbauweise ist nicht realisierbar. So wird ferner in der DE-A 35 38 002 ein Stufengetriebe bzw. ein hydrodynamisches Wandler-Automatgetriebe beschrieben, das vergleichsweise kompakt, jedoch äußerst wartungsunfreundlich ist, da beispielsweise die Antriebs-Baugruppe inmitten des Getriebes angebracht ist und dadurch sehr schwer zugänglich ist. Ebenso ist die darin beschriebene Bremsanlage, die als Verschleißteil anzusehen ist und in gewissen Zeitabständen immer wieder ausgetauscht werden muß, nicht von außen frei zugänglich, so daß sie nicht ausgetauscht werden kann, ohne weitere Getriebebaugruppen demontieren zu müssen.

Der Erfindung liegt die Aufgabe zugrunde, ein stufenloses, insbesondere hydrostatisch-mechanisches Verzweigungsgetriebe für Kettenfahrzeuge mit einem stufenlosen Überlagerungslenkgetriebe zu schaffen, das kompakt und übersichtlich in seinem Aufbau ist. Zudem soll die Modulbauweise den Austausch einzelner Baugruppen vereinfachen, die Reparaturzeiten verkürzen und die anfallenden Reparaturkosten reduzieren. Die Bedien- und Wartungsfreundlichkeit des erfindunghsgemäßen Getriebes steht trotz kompakter Bauweise im Vordergrund.

Die Aufgabe wird durch die im Anspruch 1 bzw. 5 aufgeführten Merkmale gelöst. Weitere vorteilhafte Ausgestaltungen der Erfindung gehen aus den Unteransprüchen und der nachfolgenden Beschreibung hervor. Die Erfindung wird an Ausführungsbeispielen anhand von Zeichnungen erläutert. Es zeigen:

Fig. 1 ein Ausführungsbeispiel, schematisch,

Fig. 2 eine zweite Variation des stufenlosen Lenkgetriebes.

Das Getriebe besteht im wesentlichen aus einem hydrostatisch-mechanischen Verzweigungsgetriebe 3, 4, einem hydrostatisch-mechanischen Überlagerungslenkgetriebe 45, 10, 11, 5, sowie einer Bremsanlage 6.

Im Hinblick auf eine service-freundliche und kompakte Gesamtbauweise sind auf einer Zentralachse, entsprechend den beiden Abtriebswellen 7 und 8, die Baugruppen - Hydrostatgetriebe 3 und der mechanische Getriebeteil 4 für das stufenlose hydrostatisch-mechanische Fahrgetriebe, sowie das Lenksummierungsplanetengetriebe 5 und die Bremsanlage 6 - koaxial und vorzugsweise in der aufgezählten Reihenfolge hintereinander angeordnet. Der Lenkgetriebeteil 11; 111, bestehend aus dem Planetendifferential 49 und den Lenkbereichskupplungen 34 bzw. 134, 32 und 33, sowie den dazugehörigen Wellen 29, 30 und der Null-Welle, die alle versetzt zur Zentralwelle angeordnet und zu einer gemeinsamen Baugruppe 10 zusammengefaßt werden können.

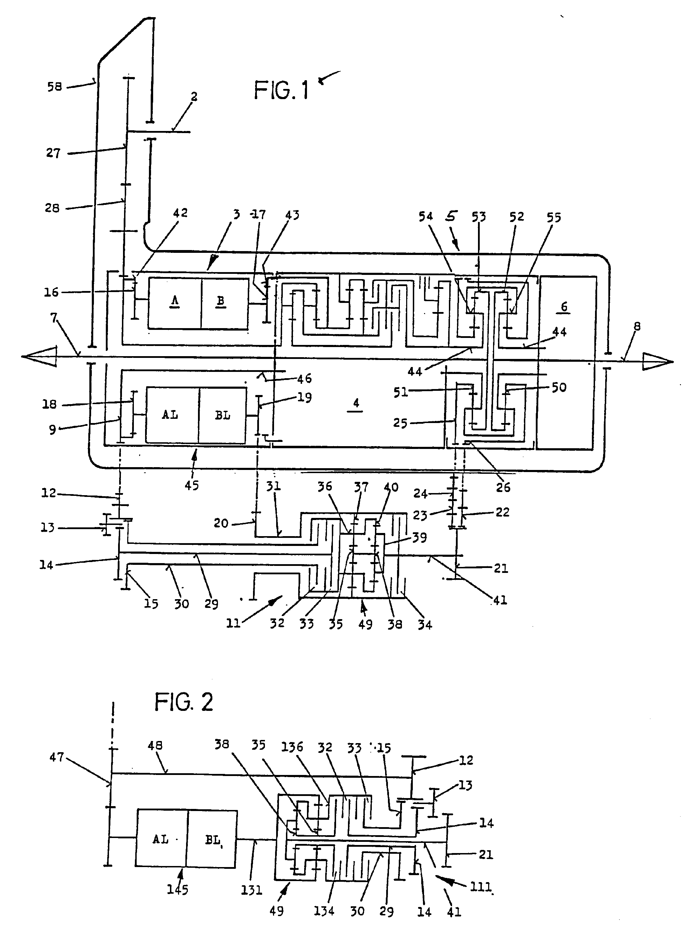

Das Hydrostatgetriebe 3 für das stufenlose Fahrgetriebe besteht aus mehreren Hydrostateinheiten A verstellbaren Volumens und Hydrostateinheiten B, vorzugsweise konstanten Volumens, die jeweils hintereinander um die Zentralwelle (Abtriebswelle 7) angeordnet sind. Diese Hydrostateinheiten sind zweckmäßigerweise in einem gemeinsamen Gehäuse in Umfangsrichtung nebeneinander angeordnet, wobei die Hydrostateinheiten A über die Antriebswelle 2 dem zentralen Antriebsrad 9 und den beiden Zahnrädern 16 und 42 angetrieben werden. Gleichzeitig wird über das zentrale Antriebsrad 9 und die Welle 46 die mechanische Leistung in den mechanischen Getriebeteil 4 des stufenlosen Fahrgetriebes geführt. Über die Hydrostateinheiten B fließt der hydraulische Leistungsanteil über die Stirnräder 17 auf ein gemeinsames Zahnrad 43 des mechanischen Fahrgetriebeteils 4. Die mit den Hydrostateinheiten A und B in Triebverbindung stehenden Zahnräder 42 und 43 sind vorteilhafterweise als Hohlräder ausgebildet, wodurch die Umfangskräfte bzw. Zahnkräfte der dazugehörigen Stirnräder 16 bzw. 17 auf ein Mindestmaß gesenkt werden können. Das Hydrostatgetriebe 45 für das stufenlose Lenkgetriebe ist, wie in Fig. 1 dargestellt, in den Bauraum des Hydrostatgetriebes 3 für den Fahrantrieb in Umfangsanordnung zur Zentralwelle mit eingegliedert. Es besteht dadurch der Vorteil, daß alle Hydrostateinheiten, sowohl für den Fahrantrieb als auch für den Lenkantrieb in einem Gehäuse untergebracht werden können und die gesamte Ölversorgung, sowie die Verstellglieder kostengünstig und einfach untergebracht werden können. Das Hydrostatgetriebe 45 für den Lenkantrieb, bestehend aus der Hydrostateinheit AL, verstellbaren Volumens, und der Hydrostateinheit BL, vorzugsweise konstanten Volumens. Der Antrieb der Hydrostateinheit AL für das Lenkgetriebe erfolgt über ein Stirnrad 18, das gemeinsam über das zentrale Antriebsrad 9 und dem Stirnrad bzw. dem Hohlrad 42 mit den Hydrostateinheiten A des Fahrgetriebes angetrieben wird. Alle Hydrostateinheiten A, B; AL, BL sind wie erwähnt in Umfangsanordnung zur Zentralwelle gelagert. Die Hydrostateinheiten A, B, AL, BL sind vorzugsweise als Axialkolbeneinheiten ausgebildet, wodurch insbesondere für Fahrzeuge hoher Leistungsklassen hohe Leistungsdichte des gesamten Hydrostatpaketes 3 erreicht wird.

Das Hydrostätgetriebe 145 für den Lenkantrieb kann auch separat angeordnet werden, wie z.B. in der Lenkgetriebeausführung nach Fig. 2 dargestellt ist. Dies ist insbesondere dann zweckmäßig, wenn das gesamte Lenkgetriebe, mit Ausnahme des Lenksummierungsgetriebes 5, zu einer Baueinheit zusammengefaßt werden soll und wenn das Hydrostatgetriebe 3 zugunsten höherer Leistung den Raum für das Fahrgetriebe voll beansprucht. Das Lenkgetriebe kann nach dieser Bauweise in einem gemeinsamen Gehäuseteil als eine gemeinsame Baueinheit montiert und von außen auf das Hauptgehäuse 1 aufgesetzt werden.

Das stufenlose Lenkgetriebe besteht aus dem Hydrostatgetriebe 45 bzw. 145 und dem Lenkgetriebeteil 11 bzw. 111 , das mit dem Lenksummierungsgetriebe 5 zusammenarbeitet. Das Lenkgetriebesystem besitzt einen ersten nach beiden Lenkrichtungen wirkenden reinhydrostatischen Lenkbereich und einen jeder Lenkrichtung zugeordneten hydrostatisch-mechanischen Lenkbereich. Der hydraulisch-mechanische Lenkbereich schließt stufenlos dem ersten rein-hydrostatischen Lenkbereich an durch Wechsel zweier Kupplungen bei Synchronlauf aller Kupplungselemente. Der Lenkgetriebeteil 11 bzw. 111 besitzt ein Planetendifferential 49, das aus zwei Planetengetriebestufen 35, 36, 37 bzw. 38, 39, 40 besteht, sowie eine Kupplung 34 für den ersten Lenkbereich beider Lenkrichtungen und eine Kupplung 32 z.B. für den zweiten hydrostatisch-mechanischen Lenkbereich für die Lenkrichtung rechts und eine weitere Kupplung 33 für den hydrostatisch-mechanischen Lenkbereich der Lenkrichtung links.

Funktion Lenkgetriebe

Bei Geradeausfahrt ist das Hydrostatgetriebe 45 bzw. 145 auf ein Fördervolumen Null eingestellt. Alle mit dem Stirnrad 19 der zweiten Hydrostateinheit in Verbindung stehenden Triebglieder Stirnrad 20, Welle 31; 131 befinden sich im Stillstand.

In diesem Schaltzustand ist auch die Kupplung 34; 134 geschlossen, wodurch die Null-Welle 41 ebenfalls steht. Die Kupplungen 32 und 33 für den jeweiligen zweiten Lenkbereich für Rechts-bzw. Linkslenkung sind geöffnet. Die mit der Null-Welle 41 in Verbindung stehenden Stirnräder 21, 22, 26 und die Stirnradstufe 21, 23, 24, 25, sowie die beiden Sonnenräder des Lenksummierungsgetriebes 5 werden in diesem Zustand, also bei Geradeausfahrt bei Drehzahl Null gehalten, Die beiden Abtriebswellen 7 und 8 werden nun von den jeweils fest verbundenen Hohlrädern 52 und 53 über die beiden Stege 54 und 55 durch die Abtriebswelle 44 des stufenlosen Fahrgetriebes 4 mit gleicher Drehzahl angetrieben. Wird nun ein Lenkvorgang eingeleitet, wird der Hydrostat 45 bzw. 145 aus Null heraus stufenlos verstellt, so daß eine beliebige Abtriebsdrehzahl der zweiten Hydrostateinheit BL über die Stirnradstufen 19, 22 auf die Kupplung 34 und die Null-Welle 41 übertragen wird, wobei gleichzeitig in ansich bekannter Weise über die beiden Stirnradstufen 21, 22, 26 und 21, 23, 24, 25 die beiden Sonnenräder 51 und 50 des Lenksummierungsgetriebes 5 in entsprechend hohe gegenläufige Drehrichtung versetzt werden. Die Hohlräder 52 und 50 welden dadurch in ihrer Drehzahlgröße verändert, wodurch eine entsprechende Lenkwirkung auf die beiden Abtriebswellen 7 und 8 erzeugt wird. Bei maximaler Verstellgröße des Hydrostaten 45 bzw. 145 ist der Endpunkt des ersten Lenkbereiches erreicht. Nun erfolgt die Schaltung in den zweiten Lenkbereich mit hydrostatisch-mechanischer Leistungsverzweigung durch Schließen z.B. der Kupplung 33 bei Synchronlauf der Kupplungsglieder und gleichzeitigem Öffnen der Kupplung 34. 134.Im zweiten Lenkbereich wird nun mechanische Leistung über die Stirnradstufen 12, 13 u. 14 und die Welle 29, die Kupplung 33, den Steg 36 auf das Planetendifferential 49 übertragen und der hydraulischen Leistung aufsummiert. Innerhalb des zweiten Lenkbereiches wird nun der Hydrostat 45 bzw. 145 zurückgeschwenkt bis auf Null und darüber hinaus bis zu seiner anderen Entstellung durchfahren, wo der Endpunkt des zweiten Lenkbereiches erreicht ist. Der Lenkvorgang in die andere Lenkrichtung ist identisch, wobei der zweite Lenkbereich über die Kupplung 32 geschaltet wird und die mechanische Leistung über die Stirnradstufen 12, 19 und die Welle 30 fließt.

Gegenüber bekannten Lenkgetriebesystemen, insbesondere nach DE 30 12 220 besitzt dieses Lenkgetriebesystem mit dem Planetenraddifferential 49 infolge der beiden Planetengetriebestufen 35, 36, 37 und 38, 39, 40 den Vorteil, daß eine günstigere Bereichsaufteilung - erster Bereich / zweiter Bereich - vorgenommen werden kann, insbesondere zugunsten guter Schaltqualität bei den Lenkbereichsschaltungen und niedrigerer Hydrostatbelastungen aufgrund kleinerer hydrostatischer Blindleistungen am Beginn des zweiten Lenkbereiches. Außerdem ist eine kleine kompakte und fahrzeuggerechte Bauweise möglich.

Außerdem ist die Nullwelle 41 nicht mit einem Sonnenrad, sondern mit einem im Durchmesser großen Planetengetriebeteil, nämlich einem Steg, verbunden. Dies hat den Vorteil geringerer spezifischer Zahnbelastungen.

In Fig. 2 ist eine Lenkgetriebeausfürung dargestellt, bei der der Hydrostat 145 koaxial zum Lenkgetriebeteil 111 angeordnet ist. Das Lenkgetriebesystem ist mit der Ausführung nach Fig. 1 prinzipiell identisch. Die Verbindung der zweiten Hydrostateinheit BL mit der ersten Bereichskupplung134 und dem Steg 36 des Planetenraddifferentials 49 wird nicht über Stirnradstufen, sondern direkt über eine Welle 131 hergestellt, Die Null-Welle 41 führt direkt durch das Lenkgetriebeteil 111, um auf einfache Weise über die Kupplung 134 im ersten Lenkbereich indirekt mit der zweiten Hydrostateinheit BL des Hydrostatgetriebes 145 gekoppelt werden zu können, Die mechanische Leistung innerhalb der zweiten Lenkbereiche fließt über die Stirnradstufe 9, 47, die Welle 48, sowie über die Stirnradstufen 12, 13, 14 bzw. 12, 15.

Der Vorteil dieser Lenkgetriebeausführung besteht darin, daß das gesamte Lenkgetriebepaket - Hydrostatgetriebe 145 und Lenkgetriebeteil 111 - zu einer Baueinheit zusammengefaßt werden können. Desweiteren ergibt sich der Vorteil, daß im Hydrostatgetriebe 3 für den Fahrantrieb ein weiterer Hydrostat untergebracht werden kann, insbesondere für den Fall, daß höhere Hydrostateckleistung für den Fahrantrieb gefordert wird.

Das Planetenraddifferential 49 besitzt eine erste Planetengetriebestufe 35, 36, 37 und eine zweite Planetengetriebestufe 38, 39, 40, wobei der Steg 39 der ersten Planetengetriebestufe mit einem gemeinsamen kupplungsglied der beiden Bereichskupplungen 32 und 33 für den hydrostatisch-mechanischen Bereich und gleichzeitig mit dem Hohlrad 40 der zweiten Planetengetriebestufe verbunden ist. Das Sonnenrad 35 der ersten Planetengetriebestufe ist mit dem Sonnenrad 38 der zweiten Planetengetriebestufe verbunden. Das Hohlrad 37 der ersten Planetengetriebestufe steht mit der zweiten Hydrostateinheit BL des Hydrostatgetriebes 45 bzw. 145 direkt mit einer Welle 131 oder indirekt über Stirnräder 19 und 20 in Triebverbindung. Bei Ausführung nach Fig. 1 ist das Hohlrad 37 gleichzeitig mit einer Kupplung 34 mit der Null-Welle 41 koppelbar. Der Steg 39 der zweiten Planetengetriebestufe ist direkt mit der Null-Welle 41 gekoppelt. Bei Ausführung nach Fig. 2 sind die Sonnenräder beider Planetengetriebestufen mit einem kupplungsglied der ersten Lenkbereichskupplung 134 verbunden.

Die Lenkgetriebeausführung nach Fig. 2 bietet den Vorteil, daß alle Lenkbereichskupplungen 134, 32 und 33 nebeneinander und zu einer Baueinheit mit einem gemeinsamen Kupplungsglied 136 zusammengefaßt werden können.

Das Kupplungsmoment im ersten hydrostatisch-mechanischen Lenkbereich ist durch die Koppelung der Sonnenräder 35 und 38 mit dem Steg 36 bzw. 136 über die Kupplung 134 wesentlich kleiner als bei Ausführung nach Fig. 1, wodurch auch eine entsprechend kleinere und kostengünstigere Kupplungsdimensionierung möglich ist.

Das Lenksummierungsgetriebe 5 besteht, in ansich bekannter Weise, aus zwei Planetengetriebestufen 51, 54, 53 bzw. 50, 55, 52. Je nach Forderung der Grenzübersetzunosverhältnisse Antrieb zu Abtrieb können beliebige, bekannte, Ausführungen des Lenksummierungsgetriebes verwendet werden. Z.B. ist es möglich, die beiden Planetengetriebestufen mit ineinandergreifende Planetenräder auszubilden mit Rücksicht auf kleinere Abtriebsdrehzahlen, um eine günstigere Drehzahlanpassung an evtl, vorhandene Kettenradgetriebe zu bekommen.

Die Bremsanlage 6 besteht, je nach Fahrzeugforderung, aus einer Flüssigkeitsbremse oder / und einer mechanischen Bremse als Feststell- und Hilfsbetriebsbremse. Durch die spezielle Anordnung als letzte Baugruppe ergibt sich der Vorteil, daß die als Verschleißteil geltenden Bauelemente der Bremse von außen her zugänglich einfach gewartet bzw. ausgetauscht werden können. Die mechanische Bremse ist hierbei zweckmäßigerweise als äußerstes Bauteil angeordnet.

Die Baueinheiten - Hydrostatpaket 3 für den Fahrantrieb, mechanischer Getriebeteil 4, Lenksummierungsgetriebe 5 und Bremsanlage 6 - sind in aufgezählter Reihenfolge hintereinander angeordnet und miteinander montierbar. Jede Baueinheit 3, 4, 5 kann eine, in sich geschlossene Montageeinheit bilden. Das Gesäuse 1 kann aufgrund dieser Modulbauart sehr einfach ausgebildet werden, wodurch wesentliche Fertigungskosten gespart und eine wirtschaftliche Fertigungsmethode erzielt wird. Durch die Anordnung des zentralen Antriebsrade 9 am Anfang aller Baugruppen kann insbesondere bei Getriebeausführung mit parallel zur Abtriebswelle angeordnetem Antriebsmotor eine sehr kompakte und fahrzeugfreundliche Bauweise des gesamten Antriebspaketes - Motor und Getriebe - erzielt werden. Der Antrieb erfolgt über eine in einem flachen Gehäuseteil 58 angeordnete Triebkette-Stirnräder 27, 28, Zentralrad 9, Das stufenlose Fahrgetriebe 3, 4 ist vorzugsweise so ausgelegt, daß die Drehzahlübersetzung bis Unendlich, d. h. bis Fahrzeugstillstand geht, wodurch eine sonst sehr kosten- und bauraumaufwendige Anfahr- bzw. Trennkupplung zwischen Motor und Getriebe entfallen kann. Als besonders vorteilhaft eignet sich hierfür das vollstufenlose Fahrgetriebesystem nach DE 36 22 045 Fig.18, wie in Figur 1 dargestellt ist.

Für den Fall einer Anordnung des Motors zum Getriebe in T-Bauweise kann nach bekannter Bauform über einen, in den Zeichnungen nicht dargestellten, Kegeltrieb mit zur Mitte verlegten Antriebswelle der Motor rechtwinkelig zur Abtriebswelle 8, 7 angeordnet werden.

Die für den ersten Lenkbereich vorgesehene Kupplung 34; 134, die eine direkte Verbindung der hydraulischen Leistung zur Null-Welle herstellt, kann ersetzt werden durch eine Kupplung, die eine Blockierung des Planetendifferentiales 49 bewirkt, z.B. indem das Hohlrad 40 mit dem Steg 39 durch eine entsprechende Kupplung verbindbar ist.

Anstelle des Planetendifferentials 49 ist auch ein nicht dargestelltes dreiwelliges Planetengetriebe mit ineinandergreifenden Planetenrädern auf einem Steg anwendbar, wobei in jedes Planetenrad ein Hohlrad eingreift und ein Hohlrad mit der Hydrostateinheit BL, das andere Hohlrad mit der Null-Welle 41 ständig in Triebverbindung steht und der Steg mit wenigstens zwei Kupplungsgliedern verbindbar ist.

Bezugszeichen

| | | | |
|---|---|---|---|
| 1 | Gehäuse | 35 | Sonnenrad |
| 2 | Antriebswelle | 36 | Steg |
| 3 | Fahrantrieb Hydrostatgetr. | 37 | Hohlrad |
| 4 | mech. Fahrgetriebeteil | 38 | Sonnenrad |
| 5 | Lenksummierungsgetriebe | 39 | Steg |
| 6 | Bremsanlage | 40 | Hohlrad |
| 7 | Abtriebswelle links | 41 | Nullwelle |
| 8 | Abtriebswelle rechts | 42 | Zahnrad |
| 9 | Zentrales Antriebsrad | 43 | Zahnrad |
| 10 | Lenkgetriebe | 44 | Fahrgetriebe-Abtriebswelle |
| 11 | Lenkgetriebeteil | 45 | Hydrostatgetr. Lenkantrieb |
| 12 | Stirnrad | 46 | Welle |
| 13 | Stirnrad | 47 | Stirnrad |
| 14 | Stirnrad | 48 | Welle |
| 15 | Stirnrad | 49 | Planetendifferential |
| 16 | Stirnrad | 50 | Sonnenrad |
| 17 | Stirnrad | 51 | Sonnenrad |
| 18 | Stirnrad | 52 | Hohlrad |
| 19 | Stirnrad | 53 | Hohlrad |
| 20 | Stirnrad | 54 | Steg |
| 21 | Stirnrad | 55 | Steg |
| 22 | Stirnrad | 56 | Stirnrad |
| 23 | Stirnrad | 57 | Antriebsmotor |
| 24 | Stirnrad | 58 | Gehäuseteil |
| 25 | Stirnrad | | |
| 26 | Stirnrad | | |
| 27 | Stirnrad | 111 | Lenkgetriebeteil |
| 28 | Stirnrad | 134 | Kupplung |
| 29 | Welle | 136 | Kupplungsglied |
| 30 | Welle | 145 | Hydrostatgetriebe für Lenkantrieb |
| 31 | Welle | | |
| 32 | Kupplung | | |
| 33 | Kupplung | | |
| 34 | Kupplung | | |

EP 0 291 525 B1

**Patentansprüche**

1. Stufenloses Fahr- und Lenkgetriebe für Kettenfahrzeuge, das aus einem als hydrostatisch-mechanisches Verzweigungsgetriebe (3,4) ausgebildetem Fahrgetriebe, einem separaten stufenlosen hydrostatisch-mechanischem Überlagerungslenkgetriebe (45,11; 145,111,49) und einer Bremsanlage (6) besteht, wobei der Antrieb (27,28,9,16,12,13,14, 15,30,29 bzw. 47,48) ständig mit dem dem stufenlosen Fahrgetriebe zugeordnetem Hydrostatgetriebe (3) und dem Lenkgetriebe verbunden ist,
dadurch **gekennzeichnet**, daß das dem stufenlosen Fahrgetriebe (3,4) zugeordnete Hydrostatgetriebe (3) und der mechanische Fahrgetriebeteil (4) samt aller Fahr-Bereichskupplungen des stufenlosen verzweigungsgetriebe, das Lenksummierungsgetriebe (5) und die Bremsanlage (6) koaxial zueinander und hintereinander in aufgezählter Reihenfolge angeordnet sind, wobei das Hydrostatgetriebe (3) aus einer oder mehreren Hydrostateinheiten (A) verstellbaren Volumens und einer oder mehreren Hydrostateinheiten (B) besteht, daß der mechanische Lenkgetriebeteil (11; 111) des stufenlosen leistungsverzweigten Überlagerungslenkgetriebes axial versetzt zur Zentralachse (Abtriebswelle 7,8) plaziert ist und daß das Lenksummierungsgetriebe (5) eine Baugruppe bildet, die dem mechanischen Fahrgetriebeteil nachgeordnet ist.

2. Stufenloses Fahr- und Lenkgetriebe für Kettenfahrzeuge nach Anspruch 1,
dadurch **gekennzeichnet,** daß der Antrieb des Getriebes über ein Zentralrad (19) erfolgt, das über Zahnräder (16 und 42) mit einer oder mehreren Hydrostateinheiten (A) und über eine Welle (46) mit dem mechanischen Fahrgetriebeteil (4) in Triebverbindung steht.

3. Stufenloses Fahr- und Lenkgetriebe für Kettenfahrzeuge nach Anspruch 1 oder 2,
dadurch **gekennzeichnet,** daß die Hydrostateinheit (B) konstantes Volumen aufweist.

4. Stufenloses Fahr- und Lenkgetriebe für Kettenfahrzeuge nach einem der Ansprüche 1 bis 3,
dadurch **gekennzeichnet,** daß die Hydrostateinheiten (A und B) hintereinander angeordnet sind und um die Abtriebswelle (7) in dem Bauraum des Hydrostatgetriebe-Paketes (3) für das Fahrgetriebe miteingegliedert sind.

5. Stufenloses Fahr-und Lenkgetriebe für Kettenfahrzeuge, das aus einem als hydrostatisch-mechanisches Verzweigungsgetriebe (3,4) ausgebildeten Fahrgetriebe und einem stufenlosen hydrostatisch-mechanischen Überlagerungs-Lenkgetriebe (45,11;145,111,49) besteht, wobei der Antrieb (27,28,9,16,12,13,14,15, 30,29 bzw. 47,48) ständig mit dem stufenlosen Fahrgetriebe zugeordnetem Hydrostatgetriebe (3) und dem Überlagerungslenkgetriebe verbunden ist und daß das Überlagerungs-Lenkgetriebe mit einem eigenen Hydrostatgetriebe (45;145), einem Planetendifferential und Kupplungen zum Schalten eines für jede Lenkrichtung vorgesehenen ersten und eines zweiten Lenkbereiches ausgebildet ist,
dadurch **gekennzeichnet,** daß das dem stufenlosen Fahrgetriebe (3,4) zugeordnete Hydrostatgetriebe (3) und der mechanische Fahrgetriebeteil (4) koaxial zueinander angeordnet ist und das stufenlose hydrostatisch-mechanische Überlagerungs-Lenkgetriebe (45,11,145,111,49) axial versetzt zur Zentralachse liegt, wobei über einen Antriebsstrang (27,28,9,12,13 und 14) zwei gegenläufig angetriebene Wellen (29 und 30) des Überlagerungs-Lenkgetriebes ständig mit der Antriebswelle (2) in Triebverbindung stehen.

6. Stufenloses Fahr-und Lenkgetriebe für Kettenfahrzeuge nach Anspruch 5,
dadurch **gekennzeichnet,** daß die zweite Hydrostateinheit (B) des Lenkgetriebes mit einer Null-Welle (41) durch Blockschaltung des Planetendifferentials (49) durch Verbinden zweier Glieder des Planetendifferentials (49) mittels einer Kupplung (134) in Triebverbidnug gebracht wird.

7. Stufenloses Fahr-und Lenkgetriebe für Kettenfahrzeuge nach Anspruch 5 und 6,
dadurch **gekennzeichnet,** daß alle Kupplungen (32,33,134) für die Lenkbereichsschaltungen zu einem Kupplungspaket zusammengefaßt sind und ein gemeinsames Kupplungsglied (136) besitzen.

8. Stufenloses Fahr-und Lenkgetriebe für Kettenfahrzeuge nach einem der Ansprüche 1 bis 7,
dadurch gekennzeichnet, daß die Baueinheiten - zentrales Antriebsrad (9), Hydrostatpaket (3) für den Fahrantrieb und gegebenenfalls Hydrostatgetriebe (45) für den Lenkantrieb, mechanischer Fahrgetriebeteil (4), Lenksummierungsgetriebe (5) und Bremsanlage (6) - zu einer gemeinsamen Baueinheit montierbar sind.

9. Stufenloses Fahr-und Lenkgetriebe für Kettenfahrzeuge nach Anspruch 5,
dadurch **gekennzeichnet,** daß im hydrostatischen ersten Lenkbereich ein Sonnenrad (35) mit einem gemeinsamen Kupplungsglied (136) verbindbar ist.

10. Stufenloses Fahr-und Lenkgetriebe für Kettenfahrzeuge nach Anspruch 5,
dadurch **gekennzeichnet,** daß das Lenkgetriebe ein Planetendifferential (49) mit einer ersten Planetengetriebestufe (35,36,37) und einer zweiten Planetengetriebestufe (38, 39,40) besitzt, wobei der Steg (36) der ersten Planetengetriebestufe mit dem Hohlrad (40) der zweiten Planetengetriebestufe und mit einem gemeinsamen Kupplungsglied der beiden Kupplungen (32 und 33) der hydrostatisch-mechanischen Lenkbereiche verbunden ist, daß die Sonnenräder (35 und 38) beider Planetengetriebestufen miteinander gekoppelt sind, daß das Hohlrad (37) der ersten Planetengetriebestufe mit der zweiten Hydrostateinheit (BL) in Triebverbindung steht und

6

daß der Steg (39) der zweiten Planetengetriebestufe mit der Null-Welle (41) verbunden ist.

11. Stufenloses Fahr-und Lenkgetriebe für Kettenfahrzeuge nach Anspruch 10,
dadurch **gekennzeichnet,** daß anstelle des Planetendifferentials (49) ein dreiwelliges Planetengetriebe mit ineinandergreifenden Planetenrädern auf einem Steg (39) anwendbar sind und,
daß in jedes Planetenrad ein Hohlrad eingreift und ein Hohlrad mit der Hydrostateinheit (BL), das andere Hohlrad mit der Null-Welle (41) ständig in Triebverbindung steht und der Steg mit wenigstens zwei Kupplungsgliedern verbindbar ist.

**Claims**

1. Infinitely variable driving and steering transmission for chain-drive vehicles, consisting of a driving transmission designed as hydrostatic-mechanical transmission with multiple power-transmission paths (3, 4), a separate infinitely variable hydrostatic-mechanical overlay steering transmission (45, 11; 145, 111, 49), and a brake system (6), wherein the drive system (27, 28, 9, 16, 12, 13, 14, 15, 30, 29 or 47, 48, respectively) is permanently connected to said hydrostatic transmission (3) associated with said infinitely variable driving transmission, on the one hand, and to said steering transmission on the other hand,
**characterized** in that said hydrostatic transmission (3) associated with said infinitely variable driving transmission (3, 4) and said mechanical driving transmission section (4), inclusive of all driving range clutches of the infinitely variable transmission with multiple power- transmission paths, said steering summation transmission (5), and said brake system (6) are disposed in mutually coaxial tandem relationship in the succession as enumerated, wherein said hydrostatic transmission (3) consists of one or more hydrostatic units (A) of adjustable volume and one or more hydrostatic units (B),
that said mechanical steering transmission section (11; 111) of said infinitely variable overlay steering transmission having multiple power-transmission paths is located with axial offset relative to the center axis (output shaft 7, 8), and that said steering summation transmission (5) constitutes an assembly disposed downstream of said mechanical driving transmission section.

2. Infinitely variable driving and steering transmission for chain-drive vehicles according to Claim 1,
**characterized** in that the transmission is driven via a central gear (19) operatively connected for being driven through gears (16 and 42) to one or more hydrostatic units (A) and through a shaft (46) to said mechanical driving transmission section (4).

3. Infinitely variable driving and steering transmission for chain-drive vehicles according to Claim 1 or 2,
**characterized** in that said hydrostatic unit (B) has a constant volume.

4. Infinitely variable driving and steering transmission for chain-drive vehicles according to any of Claims 1 to 3,
**characterized** in that said hydrostatic units (A and B) are disposed in tandem relationship and are incorporated into the mounting space for said hydrostatic transmission package (3) for the driving transmission, surrounding said output shaft (7).

5. Infinitely variable driving and steering transmission for chain-drive vehicles, consisting of a driving transmission designed as hydrostatic-mechanical transmission with multiple power-transmission paths (3, 4) and an infinitely variable hydrostatic-mechanical overlay steering transmission (45, 11; 145, 111, 49), wherein the drive system (27, 28, 9, 16, 12, 13, 14, 15, 30, 29 or 47, 48, respectively) is permanently connected to said hydrostatic transmission (3) associated with said infinitely variable driving transmission, on the one hand, and to said overlay steering transmission on the other hand, and wherein said overlay steering transmission is configured to comprise a separate hydrostatic transmission (45; 145), a planetary differential gear and clutches for shifting a first and a second steering range provided for each steering direction,
**characterized** in that said hydrostatic transmission (3) associated with said infinitely variable driving transmission (3, 4) and said mechanical driving transmission section (4) are disposed in mutually coaxial relationship and that said infinitely variable hydrostatic-mechanical overlay steering transmission (45, 11, 145, 11, 49) is arranged with an axial offset from the center axis, wherein two shafts (29 and 30) of said overlay steering transmission, which are driven for contra-rotation, are permanently operatively connected for being driven to said drive shaft (2) through a power train (27, 28, 9, 12, 13 and 14).

6. Infinitely variable driving and steering transmission for chain-drive vehicles according to Claim 5,
**characterized** in that said second hydrostatic unit (B) of said steering transmission is operatively drive-connected to a zero shaft (41) by block connection of said planetary differential (49) by interconnecting two elements of said planetary differential gear (49) by means of a clutch (134).

7. Infinitely variable driving and steering transmission for chain-drive vehicles according to Claims 5 and 6,

**characterized** in that all clutches (32, 33, 134) for steering range shifting are combined in one clutch package and share a common clutch element (136).

8. Infinitely variable driving and steering transmission for chain-drive vehicles according to any of Claims 1 to 7,

characterized in that said assemblies - i.e. the central input gear (9), the hydrostatic package (3) for driving operation and possibly the hydrostatic transmission (45) for steering operation, the mechanical driving transmission section (4), the steering summation transmission (5), and the brake system (6) - are adapted for being assembled to form a combined assembly.

9. Infinitely variable driving and steering transmission for chain-drive vehicles according to Claim 5,

**characterized** in that in said hydrostatic first steering range a sun gear (35) is adapted to be connected to a common clutch element (136).

10. Infinitely variable driving and steering transmission for chain-drive vehicles according to Claim 5,

**characterized** in that said steering transmission comprises a planetary differential gear (49) having a first planetary gear stage (35, 36, 37) and a second planetary gear stage (38, 39, 40), with the carrier (36) of said first planetary gear stage being connected to the annular gear (40) of said second planetary gear stage and to a common clutch element of the two clutches (32 and 33) of said hydrostatic-mechanical steering ranges, that the sun gears (35 and 38) of both planetary gear stages are coupled to each other, that said annular gear (37) of said first planetary gear stage is operatively connected to said second hydrostatic unit (BL) for being driven, and that the carrier (39) of said second planetary gear stage is connected to the zero shaft (41).

11. Infinitely variable driving and steering transmission for chain-drive vehicles according to Claim 10,

**characterized** in that instead of said planetary differential gear (49) a three-shaft planetary gear set with meshing planetary gears on a carrier (39) is applicable, and

that an annular gear engages into each planetary gear, and that one annular gear is permanently operatively connected for being driven with said hydrostatic unit (BL) while the other annular gear is permanently operatively connected to said zero shaft (41), whilst said carrier is adapted to be connected to at least two clutch elements.

## Revendications

1. Transmission à réglage continu de conduite et de direction pour véhicules chenillées, composée d'une transmission de conduite configurée en tant qu'une transmission hydrostatique-mécanique à plusieurs voies de transmission (3, 4), d'une transmission en cascade de direction séparée à réglage continu hydrostatique-mécanique (45, 11; 145, 111, 49), et un système de freinage (6), dans laquelle le système de commande (27, 28, 9, 16, 12, 13, 14, 15, 30, 29 ou 47, 48, respectivement) est constamment relié à ladite transmission hydrostatique (3) affectée à ladite transmission de conduite à réglage continu, d'une part, et à ladite transmission de direction, d'autre part,

caractérisée en ce que ladite transmission hydrostatique (3) affectée à ladite transmission de conduite à réglage continu transmission (3, 4) et mécanisme de commande de conduite (4), à l'inclusion de tous les embrayages de régime de conduite de la transmission à réglage continu à plusieurs voies de transmission, l'engrenage intégrant de direction (5) et le système de freinage (6) sont disposés l'un derrière l'autre à arrangement coaxial dans l'ordre de leur énumération, dans laquelle ladite transmission hydrostatique (3) comprend une ou plusieurs unités hydrostatiques (A) à volume réglable et une ou plusieurs unités hydrostatiques (B), que ledit mécanisme d'engrenage de direction (11; 111) de ladite transmission en cascade à réglage continu de direction à plusieurs voies de transmission, est disposé à déport axial relativement à l'axe centrale (arbre de sortie 7, 8), et en ce que ledit engrenage intégrant de direction (5) constitue un ensemble disposé en aval dudit mécanisme de commande de conduite.

2. Transmission à réglage continu de conduite et de direction pour véhicules chenillées selon la Revendication 1,

caractérisée en ce que la transmission est commandée par une roue centrale (19) activement reliée à être commandée à une ou plusieurs unités hydrostatiques (A) par des roues (16 et 42) ainsi qu'audit mécanisme de commande de conduite au moyen d'un arbre (46 )

3. Transmission à réglage continu de conduite et de direction pour véhicules chenillées selon la Revendication 1 ou 2,

caractérisée en ce que ladite unité hydrostatique (B) à un volume invariable.

4. Transmission à réglage continu de conduite et de direction pour véhicules chenillées selon une quelconque des Revendications 1 à 3,

caractérisée en ce que lesdites unités hydrostatiques (A et B) sont disposées l'une derrière l'autre et sont incorporées dans l'espace de montage pour ledit paquet de transmission hydrostatique (3) pour la transmission de conduite, en entourant ledit arbre de sortie (7).

5. Transmission à réglage continu de conduite et de direction pour véhicules chenillées, composée d'une transmission de conduite configurée en tant qu'une transmission hydrostatique-mécanique à plusieurs voies de transmission (3, 4) et d'une transmission en cascade de direction séparée à réglage continu hydrostatique-mécanique (45, 11; 145, 111, 49), dans laquelle le système de commande (27, 28, 9, 16, 12, 13, 14, 15, 30, 29 ou 47, 48, respectivement) est constamment relié à ladite transmission hydrostatique (3) et à ladite transmission en cascade de direction, et dans laquelle ladite transmission en cascade de direction est pourvue d'une transmission hydrostatique (45; 145) séparée, d'un différentiel planétaire et des embrayages pour changer un premier et un deuxième régime de direction prévus pour chacune des sens de direction,

**caractérisée** en ce que ladite transmission hydrostatique (3) affectée audit engrenage de conduite à réglage continu (3, 4) et ledit mécanisme de commande de direction (4) sont disposés en relation coaxiale, et en ce que ladite transmission en cascade hydrostatique-mécanique à réglage continu de direction (45, 11, 145, 11, 49) est disposée à déport axial de l'axe centrale, dans laquelle deux arbres (29 et 30) de ladite transmission en cascade de direction, qui sont commandés à rotation en sens opposés, sont constamment activement reliés à être commandés audit arbre d'entrée (2) par une voie de transmission (27, 28, 9, 12, 13 et 14).

6. Transmission à réglage continu de conduite et de direction pour véhicules chenillées selon la Revendication 5,

**caractérisée** en ce que ladite deuxième unité hydrostatique (B) de ladite transmission de direction est activement reliée a être commandée à un arbre zéro (41) par combinaison en bloc dudit différentiel planétaire (49) en reliant deux éléments dudit différentiel planétaire (49) l'un avec l'autre au moyen d'un embrayage (134).

7. Transmission à réglage continu de conduite et de direction pour véhicules chenillées selon les Revendications 5 et 6,

**caractérisée** en ce que tous les embrayages (32, 33, 134) pour changer le régime de direction sont combinés dans un seul paquet d'embrayage et ont un élément d'embrayage (136) en commun.

8. Transmission à réglage continu de conduite et de direction pour véhicules chenillées selon une quelconque des Revendications 1 à 7,

caractérisée en ce que lesdits ensembles - c.a.d. la roue centrale d'entrée (9), le paquet hydrostatique (3) pour le commande de conduite et, si nécessaire, l'engrenage hydrostatique (45) pour l'opération de direction, le mécanisme de commande de direction (4), l'engrenage intégrant de direction, et le système de freinage (6) - sont aptes à être montés pour former un ensemble combiné.

9. Transmission à réglage continu de conduite et de direction pour véhicules chenillées selon la Revendication 5,

**caractérisée** en ce q'au premier régime de direction hydrostatique une roue solaire (35) est apte à être reliée à un élément d'embrayage commun (136).

10. Transmission à réglage continu de conduite et de direction pour véhicules chenillées selon la Revendication 5,

**caractérisée** en ce que ladite transmission de direction comprend un différentiel planétaire (49) à un premier étage planétaire (35, 36, 37) et un deuxième étage planétaire (38, 39, 40), le porteur (36) dudit premier étage planétaire étant relié à la couronne (40) dudit deuxième étage planétaire et à un élément d'embrayage commun des deux embrayages (32 et 33) desdits régimes de direction hydrostatiques-mécaniques, en ce que les roues solaires (35 et 38) desdits deux étages planétaires sont coulées l'une avec l'autre, en ce que ladite couronne (37) dudit premier étage planétaire est activement reliée à être commandée à ladite deuxième unité hydrostatique (BL), et en ce que le porteur (39) dudit deuxième étage planétaire est relié audit arbre zéro (41).

11. Transmission à réglage continu de conduite et de direction pour véhicules chenillées selon la Revendication 10,

**caractérisée** en ce qu'on peut prévoir un engrenage planétaire à trois arbres et aux pignons planétaires en prise sur un porteur (39) au lieu dudit différential planétaire (49), en ce qu'une couronne se trouve en prise dans chacun desdits pignons planétaires, et

en ce qu'une couronne est constamment activement reliée à être commandée avec ladite unité hydrostatique (BL) pendant que l'autre couronne est constamment activement reliée audit arbre zéro (41), et pendant que ledit porteur est apte à être relié à au moins deux éléments d'embrayage.

FIG. 1

FIG. 2